# EUROPEAN PATENT APPLICATION

(11) **EP 4 840 536 A1**
(43) Date of publication of application: **18.11.2026**
(21) Application number: 25176806.5
(22) Date of filing: 15.05.2025
(51) Int. Cl.: B01J 8/02

(54) **REACTORS AND SYSTEMS FOR SEASONAL ENERGY STORAGE**

(71) Applicant: ETH Zürich, 8092 Zürich (CH)
(72) Inventor: Heiniger, Samuel, 4922 Thunstetten (CH); Zhiyuan, Fan, 8180 Bülach (CH); Giezendanner, Kelani, 5610 Wohlen (CH); Bangerter, Luca, 3073 Gümligen (CH); Stark, Wendelin Jan, 4900 Langenthal (CH)
(74) Representative: E. Blum & Co. AG

(57) **Abstract**

The present invention relates to hydrogen / energy storage systems and reactors useful in such systems. Inventive reactors comprise a reaction vessel defining an inner volume and a recycle loop, whereby said inner volume is filled with a fixed bed that is essentially free of cavities and that comprises particles of formula (I), FeOx (I), where 0 ≤ x ≤ 1.5; said recycle loop allows fluid communication between a reactor outlet and reactor inlet. The inventive reactor is inherently explosion - proof and simultaneously overcomes the problem of material deactivation and capacity loss during multiple cycles of charging and discharging. The systems are useful for compensating long-term fluctuations observed in production of renewable energy.

The invention further provides for (i) an improved method of generating hydrogen by reacting iron particles with steam to obtain iron oxide particles and hydrogen; (ii) methods for storing electrical energy and (iii) methods for storing hydrogen.

## Description

### Summary:

The present invention relates to a seasonal energy storage plant and reactors useful in such plants. The reactors are of simple design and stable towards chemical deactivation and capacity loss, making them suited for large scale applications. Energy storage plants implementing these reactors are suited to transfer renewable energy from high productive periods to low productive periods, such as solar energy from summer months to winter months on a large scale, thereby mitigating long-term fluctuations in electrical grids. The invention further relates to improved methods for obtaining hydrogen by oxidizing iron in the presence of steam and hydrogen and to the use of gaseous mixtures comprising hydrogen and water to oxidize iron.

### Background:

It is generally accepted that energy production requires improvements. Many governments have implemented strategies to achieve reliable and sustainable supply of electrical energy for both domestic use and industrial use. For example, the three pillars of the Swiss Energy Strategy 2050 comprise the stepwise phase-out of nuclear power, measures for increasing renewable energy production, and improving the energy efficiency of industry, buildings, mobility, and devices. Generally, nuclear power plants constantly and reliably produce electricity. In contrast, renewable energy sources (e.g. photovoltaic power and wind power) heavily depend on weather conditions. In the long term, the transition (or substitution) from nuclear to renewable energy requires additional measures to match supply and demand at all times such as peak shaving, load shifting and energy storage.

It is also generally accepted that production and consumption of energy fluctuate; an electrical grid therefore needs to compensate short-term, mid-term and long-term fluctuations. Renewable power sources heavily depend on weather conditions. Thus, production of renewable energy fluctuates on multiple time scales: hourly, daily, and seasonally. To maximize renewable energy production at all times, the temporal surplus between produced and consumed energy has to be stored for a certain time.

The steam-iron-process is known. Briefly, excess energy is stored by producing hydrogen and reacting the hydrogen with iron oxide in a reactor, thereby generating steam and iron. When energy is needed, the iron generated in the previous step is converted with steam generating hydrogen and iron oxide. The generated hydrogen can then be converted to power, heat or it can be used for chemical processes.

Bock et al (Energy Conversion and Management, 2022, 267, 115834) discuss the use of natural iron ores as inexpensive storage material for large-scale mid- and long-term energy storage and identify siderite as a promising candidate for this process based on TG analysis. The authors speculate about suitable process conditions and system designs.

Heiniger et al (Sustainable Energy Fuels, 2024, 8, 125) disclose a reactor for safe seasonal energy and hydrogen storage in a 1 : 10 single-household-sized pilot reactor based on the steam-iron process using magnetite as iron compound and asses its techno-economical potential. The authors admit that efficiency of the system disclosed was very low, with an overall storage efficiency of 11.4% and propose various measures for improving it.

DE10 2017 201 861 describes an energy storage system using the redox pair Fe₃O₄ / Fe. The systems disclosed in that document are complicated and require movement of solid material (Fe / Fe₃O₄) from storage devices to reactors and solid-gas separators. Such systems require a high level of maintenance and/or are prone to malfunction. Further, the system contains hydrogen and inherently bears the risk of an explosive incident. As a consequence, such systems show disadvantages for large scale applications.

WO2020/173907 and WO202242911 also describe energy storage systems using the steam-iron-process. Although suitable, the systems described therein suffer from long-term stability. As a consequence, such systems show disadvantages for large scale applications.

EP1516853 disclose methods for producing hydrogen and reactors for supplying hydrogen implementing the steam - iron-process. The authors propose a non-pressure, fixed-bed circulation-type reactor. To improve long-term stability, the authors further propose the use of synthetic iron oxides containing platinum metal dopants in an amount of 0.1 - 30 mol%. The system is designed for portable applications and not suited for large scale.

In consequence, there is a need for further, particularly improved, reactors, energy storage systems and for providing improved methods to mitigate long-term fluctuations in electrical grids and to obtain hydrogen.

Thus, it is an object of this invention to mitigate at least some of these drawbacks of the state of the art. In particular, it is an aim of the present invention to provide energy storage systems that are more reliable and / or show long-term stability when compared to known systems.

These objectives are achieved
- In a 1^{st} aspect by providing a method for generating hydrogen, implementing the steam-iron process using a gaseous mixture comprising hydrogen and water;
- In a 2^{nd} aspect by providing an improved reactor, designed to implement this reaction;
- In a 3^{rd} aspect by providing an energy storage system integrating this reactor into a system for producing and releasing hydrogen; and
- In a 4^{th} aspect by uses and operation modes of these reactors and systems.

Further aspects of the invention are disclosed in the specification and independent claims, preferred embodyments are disclosed in the specification and dependent claims.

### Description of the invention

The present invention will be described in more detail below. It is understood that the various embodiments, preferences and ranges as provided / disclosed in this specification may be combined at will. Further, depending of the specific embodiment, selected definitions, embodiments or ranges may not apply.

Unless otherwise stated, the following **definitions** shall apply in this specification:
As used herein, the term "a", "an", "the" and similar terms used in the context of the present invention (especially in the context of the claims) are to be construed to cover both the singular and plural unless otherwise indicated herein or clearly contradicted by the context. As used herein, the term "containing" shall include "comprising", "essentially consisting of" and "consisting of".

The term "fixed bed", also termed "packed bed", is known in the field. It particularly denotes a packing material stationery and immovable located within a reactor vessel. Fixed beds are not agitated by a high mass flow of a fluid or by a stirring device and thus distinguish from a fluidized bed or a moving bed. The packing material of the fixed bed is adapted for allowing one or more fluids passing through the bed thereby allowing a chemical reaction. Suitable packing materials include particles (such as powders, granules and the like) shaped articles (such as Raschig rings) and structured packings. Fixed beds may be characterized by inter-particle porosity, intra-particle porosity and total porosity. Porosity may be determined by standard methods, particularly as described in WO2022/042911.

The term "particle" is known in the field. It particularly denotes a material in a specific form that stays together under a given mechanical treatment. Particles may be characterized by its appearance (including porous, nonporous, granular), the particle size, particle size distribution, porosity, density and specific surface area. Particles can be solid, that means they exclusively consist of a solid and have a well-defined, continuous outer surface without openings or pores. The whole particle volume is filled with material. Typical examples of solid particles are particles as they result from solidification of droplets from a molten material, such as glass, wax or metals. The surface tension of these materials tries to create particles with minimal surface and closes openings and pores during the fabrication process. The particle density (ρ_part) of a solid particle is therefore equal to the material density (ρ_mat) of the solid material that composes the particle.

For solid particles, the particle volume can be obtained from the particle mass and the material's density. Densities for typical materials are tabulated properties and depend on the materials chemical composition. Particles can also be porous. The volume of a porous particle is filled with solid material and with void space. Porous particles can have at least one closed void within their interior (non-accessible empty space within the solid), or they have at least one opening or pore in their outer surface. Porous particles are typically a result from a drying process or a mechanical treatment where components of the porous particles are brought together and then form a particle (granules).

To distinguish between open space (a part of space that is not filled with a solid) between particles and within a particle, the concept of inter-particle and intra-particle porosity is used.

Inter-particle porosity (= voidage, bed porosity), ε_bed: The space between solid particles expressed as a percentage or fraction of the total volume. The inter-particle porosity of a fixed bed is used to indicate the available space for the flow of fluid for chemical reaction. The inter-particle porosity of a fixed bed is the ratio of the volume of voids between particles to the total volume of the bed. The value is dependent on the shape and size distribution of the particles, the ratio of the particle size to bed diameter, and the method used for filling the bed. The volume of the voids is the volume of the bed minus the volume of the particles. For spheres of uniform size, the range of attainable porosities is given by ordered packings with values from 0.26 (rhombohedral packing) to 0.48 (cubic packing). Disordered or random packings of spheres typically range from 0.44 (very loose random packing) to 0.36 (close random packing).

Multiple experimental techniques for determining characteristics of porous materials exist. Gas sorption with nitrogen is used for measurements involving pore diameters in the range form 0.4 - 300 nm (Klobes et al., 2006). Liquid intrusion by a non-wetting liquid (i.e. mercury porosimetry) is widely accepted for scales above 4 nm, particularly between 4 nm and 60 µm. (Espinal, 2012). Suitable particles in the context of this invention are particularly of diameter 0.01 µm - 1.0 µm (as defined by the above norm) and/or 2 - 80 m²/g surface area.

The present invention will be better understood by reference to the **figures.**

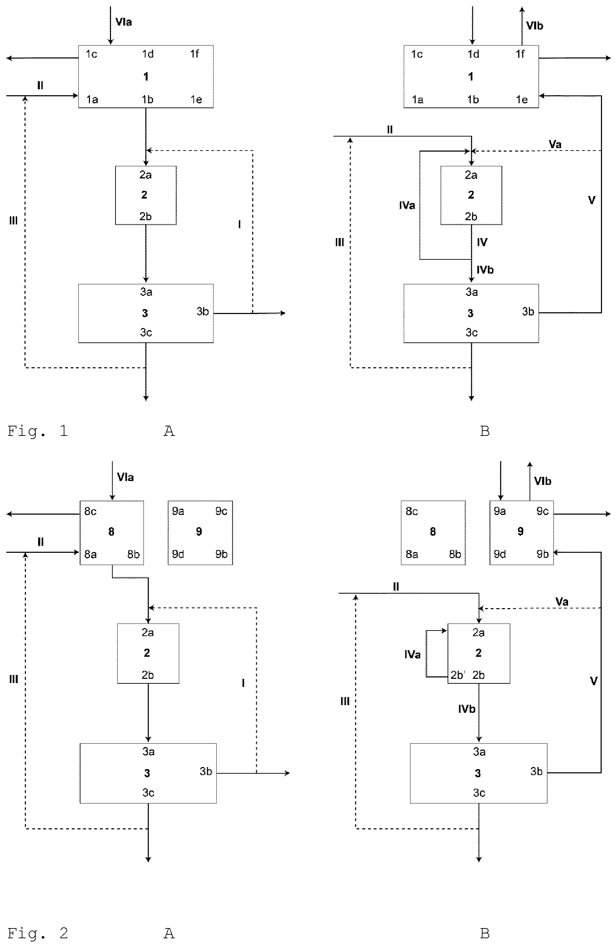

Figs. 1A, 2A and 3A show charging mode, while Figs. 1B, 2B and 3B show discharging mode of the inventive hydrogen storage systems 13. Dotted lines are optional, solid lines are mandatory. List of references for storage system 13:
- 1: Reversible fuel cell
1a Water inlet
1b Hydrogen outlet
1c Water/oxygen outlet
1d Air inlet
1e Hydrogen inlet
1f Water/air outlet
- 2: Reactor
2a Reactor inlet
2b Reactor outlet
- 3: Hydrogen-water separator
3a Separator inlet
3b Hydrogen-rich phase outlet
3c Water-rich phase outlet
- 8: Electrolyzer
8a Water inlet
8b Hydrogen outlet
8c Water/oxygen outlet
- 9: Fuel cell or Hydrogen Turbine
9a Air inlet
9b Hydrogen inlet
9c Water/air outlet
9d Hydrogen outlet (in case of fuel cell)
- 10: Hydrogen-water separator for charging
10a Separator inlet
10b Hydrogen-rich phase outlet
10c Water-rich phase outlet
- 11: Hydrogen-water separator for discharging
11a Separator inlet
11b Hydrogen-rich phase outlet
11c Water-rich phase outlet
- I: Hydrogen recycle
- II: Water feed
- III: Water recycle line
- IV: reactor output, sum of IVa and IVb
- IVa: Recycle stream / recycle loop (direct loop,
inventive)
- IVb: initial Product stream
- V: Hydrogen stream (discharging)
- Va: indirect recycle loop (optional)
- VIa: Power input(charging),
- VIb: Power output(discharging)

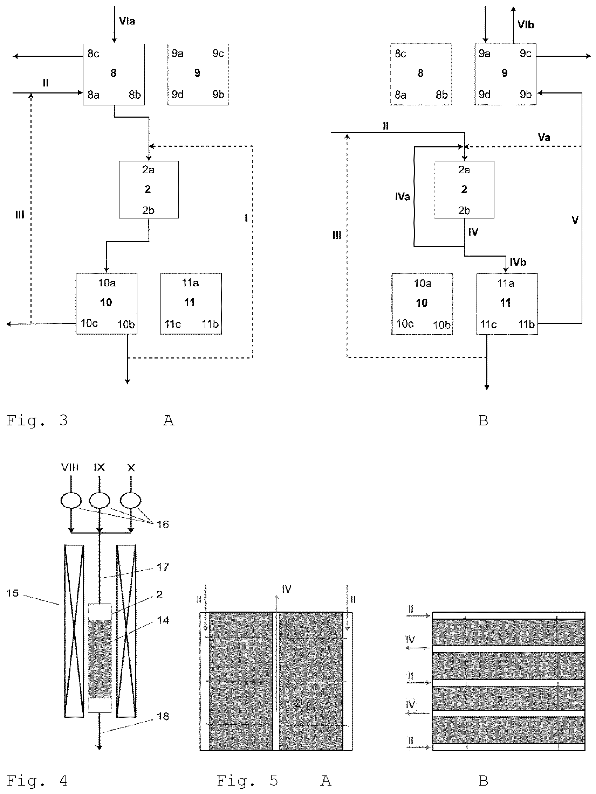

Fig. 4 shows an experimental set up as explained in further detail in the experiments section.
- 14: Iron compound of formula (I)
- 15: electric furnace
- 16: mass flow controller
- 17: feed pipe
- 18: outlet pipe
- VIII: hydrogen inlet
- IX: steam inlet
- X: inert gas inlet

**Fig. 1** shows a first embodiment of the inventive system, comprising a reactor 2 with recycle loop IV as described herein, a reversible fuel cell 1 and a Hydrogen-Water Separator 3.

In charging mode according to fig. 1A, power input (VIa) is in operation and allows reduction reaction in reactor 2 as described herein.

In discharging mode according to fig. 1B, power output (VIb) is in operation driven by oxidation reaction in reactor 2 as described herein. During operation, the H2/H2O mixture leaving reactor outlet 2b is split into a first portion for recycling via line IV and a second portion for H2/H2O separation in separator 3. The purified hydrogen leaving separator outlet 3b may optionally split in a first portion V for use in reversible fuel cell 1 for ultimate generation of electrical energy and an optional second portion Va for feeding reactor 2.

**Fig. 2** shows a second embodiment of the inventive system, comprising a reactor 2 with recycle loop IVa as described herein, and a Hydrogen-Water separator 3. In this second embodiment, an electrolyzer 8 and a hydrogen turbine 9 are replacing the reversible fuel cell compared to the embodiment in Fig. 1.

In charging mode according to fig. 2A, power input (VIa) is in operation and allows reduction reaction in reactor 2 as described herein; hydrogen turbine (9) is not in operation.

In discharging mode according to fig. 2B, power output (VIb) is in operation driven by oxidation reaction in reactor 2 and hydrogen turbine (9). Electrolyzer (8) is not in operation.

During discharge, the H2/H2O initially produced in reactor (2) is released to at least two different outlets. Other than in fig.1, no splitter being required to separate IVa and IVb. Rather, a first outlet (2b') supplies recycle line IVa with a first portion of initially produced H2/H2O and a second outlet (2b) supplies initial product line IVb with a second portion initially produced H2/H2O for separation in separator 3 (IVb, "initial product stream").

The purified hydrogen leaving separator outlet 3b may optionally split into line V for use in hydrogen turbine 9 for ultimate generation of electrical energy and line Va for feeding reactor 2.

**Fig. 3** shows a third embodiment of the inventive system, comprising a reactor 2 with recycle loop IV as described herein, an electrolyzer 8 and a hydrogen turbine 9. In this third embodiment, the Hydrogen-Water separator 3 is replaced by a Hydrogen-Water separator for charging 10 and a Hydrogen-Water separator for discharging 11 when compared to the second embodiment.

In charging mode according to fig. 3A, power input VIa is in operation and allows reduction reaction in reactor 2 as described herein; hydrogen turbine 9 and separator 11 are not in operation.

In discharging mode according to fig. 3B, power output VIb is in operation driven by oxidation reaction in reactor 2 and hydrogen turbine 9. Electrolyzer 8 and separator 10 are not in operation. As in figs. 1 and 2, during discharge, the H2/H2O mixture leaving reactor outlet 2b is split into a first portion for recycling via line IV and a second portion for H2/H2O separation in separator 11. The purified hydrogen leaving separator outlet 11b may optionally split as discussed above into mandatory stream V and optional stream Va.

**Fig. 4** shows experimental set up of a model reactor to simulate recycle stream IV.

**Fig. 5** shows two alternative embodiments of supplying feed to the reactor and of removing initial product from the reactor.
5A_axial supply
5B radial supply

In more general terms, in a **first aspect,** the invention relates to a method for generating hydrogen by reacting iron particles with steam to obtain iron oxide particles and hydrogen. This reaction is performed under solvent free conditions. Further, this reaction is performed by contacting the iron particles with a gaseous mixture comprising hydrogen and water, obtaining a gaseous mixture comprising hydrogen and water with increased hydrogen content. In other words, the reaction product hydrogen is supplied with the starting material water to the reactant iron, which is against the intuition of the skilled person. By doing so, it was surprisingly found that sintering effects are reduced and the reaction may be implemented for running a hydrogen storage system as described herein. It is found that by enriching the water feed stream with hydrogen during the oxidation of iron, chemical reactivity and specifically hydrogen storage capacity can be maintained over several cycles compared to state-of-the-art iron oxidation with pure steam. This effect was experimentally confirmed by oxidizing iron with different quantities of hydrogen supplemented. An effective way to provide such a hydrogen-enriched water feed is by introducing a recycle loop.

This aspect of the invention shall be explained in further detail below:
In embodiments, the inventive method comprised the steps of (a) providing particles of formula (I), FeOx (I), in reduced form, preferably where 0 ≤ x ≤ 1.0; (b) contacting said particles with a gaseous mixture comprising H2 and H2O at temperatures between 400 - 600°C, preferably between 450 - 570°C. This reaction results in a gaseous mixture with increased hydrogen content.

The amount of water or other inert gases may vary over a broad range. Suitably, the gaseous mixture supplied in step b. contains more than 60 vol% H2, less than 40 vol% H20 and less than 5 vol% other components.

The reaction is exothermic, suitable reaction rates are observed at temperatures above 400°C. To maintain these temperatures, it is preferred to supply the gaseous mixture in pre-heated form. Suitably, gaseous mixture of step b. is provided at temperatures of at least 300°C, preferably at least 400°C.

The reaction may take place at comparatively low pressures. Suitably the gaseous mixture of step b. is provided at pressures p between 0 - 10 bar, preferably 0 - 5 bar. In embodiments, a pressure p of 5 < p ≤ 10 bar is envisaged. This embodiment is particularly useful if the produced hydrogen is used in further reaction steps at such increased pressure.

The particles of formula (I) may be present in various forms. Suitably, compound of formula (I) is provided in the form of a fixed bed. In such embodiment, it is advantageous if said gaseous mixture of step b. is continuously supplied to said fixed bed and said hydrogen-enriched gaseous mixture is continuously removed from said fixed bed. As used herein, the term "continuous" refers to a prolonged period of time, such as a summer season or winter season, as discussed below.

In a further preferred embodiment, the reaction of this first aspect of the invention is performed in a reactor described herein, second aspect of the invention.

The invention further provides for the use of a gaseous mixture as described herein (i.e. comprising H2 and H2O) for oxidizing iron particles as described herein (i.e. particles of formula (I), FeOx (I), present in reduced form, preferably where 0 ≤ x ≤ 1.0).

In embodiments, the invention provides for the use of a gaseous mixture as described herein for oxidizing iron particles as described herein in a continuous process.

In embodiments, the invention provides for the use of a gaseous mixture as described herein as a starting material for obtaining hydrogen.

In a **second aspect,** the invention relates to a specific reactor 2 comprising a reaction vessel 2c defining an inner volume, an inlet and an outlet 2a, 2b, an insulation 2f, and a recycle loop (IV), characterized in that said inner volume is filled with a fixed bed and said recycle loop allows fluid communication between said outlet 2b and said inlet 2a. Said fixed bed contains or consists of particles of formula (I), FeOx (I), where 0 ≤ x ≤ 1.5 as defined in further detail below.

The inventive reactor 2 allows the conversion of hydrogen to water (thereby capturing the thus obtained chemical energy, "charge mode") and its reverse reaction (thereby releasing hydrogen, "discharge mode"). The combination of these two reaction modes is referred to as an "improved steam iron process" as an improved reactor is used to perform that process. The inventive reactor is inherently explosion - proof and simultaneously overcomes the problem of material deactivation and capacity loss during multiple cycles of charging and discharging.

This aspect of the invention shall be explained in further detail below:
The steam iron process is an established process for purification, compression and storage of hydrogen, as discussed above. Within this process iron oxide is chemically converted to iron in the presence of hydrogen ("charging") followed by a subsequent oxidation of iron to iron oxide in the presence of water, thereby releasing hydrogen ("discharging"). When performing this discharging step, the iron oxygen carrier is deactivated over time, leading to losses of the stored hydrogen and storage capacity. To address this shortcoming, a number of approaches are considered. A fist approach necessitates the exchange of the iron oxygen carrier after few cycles. A second approach chooses reaction parameters where only a fraction of the material is effectively used. A third approach proposes modification of the iron oxide by adding costly chemical dopants to avoid deactivation. Evidently, none of these approaches is considered convincing from a commercial perspective.

The invention describes a modified reactor, resulting in a process modification, which avoids material deactivation, therefore avoiding the shortcomings of the above approaches. Specifically, there is no need for modification of the oxygen carrier material and an increased material lifespan is observed without the need to adapt reaction parameters or exchange of iron oxide carrier after a few cycles only.

**Reactor 2:** The reactor is a unit able to perform a chemical reaction, particularly reduction and oxidation of FeOₓ (I) as discussed herein. The inventive reactor comprises a number of elements, particularly a reaction vessel, one or more inlets and outlets, an insulation and at least one recycle line connecting said in- and outlet. Further elements may be present, e.g. a heating element and / or sensors for detecting oxygen and or compensation element(s). The skilled person is familiar with equipping a reactor with all elements necessary to perform the reaction described herein and to integrate the reactor in a system as described herein (2^{nd} aspect). The skilled person is also familiar with selecting materials adapted to the reaction conditions described herein. Requirements for reactor materials comprise long-term stability at high-temperatures during exposure to hydrogen and/or steam. Suitable materials for the reactor vessel include austenitic stainless steels with an enhanced corrosion resistance and low potential hydrogen damage, such as type 316L (1.4404) and type 316Ti (1.4571). Suitable seal materials include expanded graphite sheet.

As outlined below, the reactor is operated at 0 to < 5 bar and at temperatures in the range of 150 - 650 °C, preferably 400 - 600 °C, most preferably 450-570°C. Accordingly, reactor 2, particularly reaction vessel 2c, is adapted to pressures of less than 5 bar, and temperatures of 650°C or less. As outlined below, the reactor is operated in an alternative embodiment at 5 to ≤ 10 bar and at temperatures in the range of 400 - 600 °C, preferably 450-570°C. Accordingly, reactor 2, particularly reaction vessel 2c, is adapted in this embodiment to pressures of less than 10 bar, and temperatures of 600°C or less. As used herein, indication of a pressure refers to "positive pressure" compared to the environmental pressure.

**Recycle loop IVa:** The inventive reactor 2 comprises at least one recycle loop IVa, i.e. a line allowing fluid communication between a reactor outlet 2b and a reactor inlet 2a. The recycle loop IV is considered a "direct loop", as there are no other units integrated within loop IVa. The recycle loop may be implemented either by providing a splitter (thereby separating the reactor output IV into recycle stream IVa and initial product stream IVb), or by providing at least two reactor outlets 2b, 2b' without splitter, thereby directly forming streams IVa and IVb.

Accordingly, in a first embodiment, the recycle loop is implemented by splitting the initial reactor outlet stream IV into a recycling stream (directing a part of the H₂/H₂O stream generated back to inlet 2a) and a product stream (directing the remainder of the H₂/H₂O stream generated to the hydrogen / water separator 3 (or 11, respectively). This first embodiment is shown in fig. 1.

In an alternative 2^{nd} embodiment, the recycle loop is implemented by providing at least two reactor outlets 2b and 2b'. One outlet 2b' for feeding the recycle loop IVa (thereby directing a part of the H₂/H₂O stream generated back to inlet 2a) and one further outlet for feeding the hydrogen / water separator 3 (or 11, respectively) thereby forming the initial product stream IVb. This alternative 2^{nd} embodiment is shown in fig. 2.

Such recycle loop IVa may be implemented as known in the field of chemical production plants. Suitably, and preferably, the recycle loop is insulated and / or comprises heating elements. This measure avoids condensation of water in that the gas stream is kept above the condensation temperature of the given stream.

Suitably, and preferably, the recycle loop contains active means for gas transportation, such as a compressor, a blower, a fan. This measure allows reliable operation.

Typically, recycle loop IVa is in operation during discharging mode. When in charging mode, there is a need to operate a recycle line IVa. Without being bound to theory, it is believed operating recycle loop IVa during discharge substantially improves long-term stability of the compounds of formula (I) and thus avoids the shortcomings of the prior art discussed above. Implementing a recycle loop IVa is therefore considered a key element of the present invention.

This recycle loop IVa, which directly connects out- and inlet, may be complemented by an optional 2^{nd} recycle loop Va which indirectly connects to the reactor inlet via separator 3b / 11b.

**Reaction vessel 2c:** The inner volume of the reaction vessel may vary over a broad range, suitable are 1 - 100000m³, in particular 10 - 1000m³. In embodiments, the reaction vessel is below 50 m³, e.g. 10 - 50 m³ (a "small reactor"); in alternative embodiments, the reaction vessel is larger than 50 m³, e.g. 50 - 1000 m³ (a "large reactor"). The shape of the reaction vessel may be generally any shape known in the art; its design is particularly driven considering isolation and heating as well as manufacturing. Suitable are reaction vessels in the form of a cylinder or a sphere or a tube bundle, preferably a cylinder. Preferably, the outer geometry of the reactor vessel is chosen to minimize surface to volume ratio for avoiding heat losses.

As outlined herein, the reaction vessel is filled with particles of formula (I) in the form of a fixed bed. Accordingly, there is no need to include means for agitation and / or for transportation of particles within the reactor. This is considered particularly advantageous, as it makes the reactor more robust and particularly useful in large scale applications.

In one embodiment, the fixed bed comprises elements adapted to enhance convective and/or conductive transport of mass and/or heat within the fixed bed (a "structured fixed bed"). For example, the fixed bed can contain flow directing elements. In particular, such elements might be for example static mixers that are generally used to enhance transport of heat and mass.

In one further embodiment, the fixed bed contains materials that enhance conductive transport of heat within the fixed bed such as steel wool with a high stability under process conditions.

In one embodiment, the fixed bed consists of particles of formula (I) in the form of a compacted powder, such as pellets. The compacted powder may be shaped in a way to enhance convective transport of mass and /or heat within the fixed bed.

It was found that a reactor 2 may perform the steam iron process discussed above reliable over a prolonged period of time without the need of implementing a structured fixed bed and without the need of implementing compensation elements. Without being bound to theory, it is believed that the recycle line IV provides for optimal reaction conditions obviating the need of such additional elements. Accordingly, the invention relates to a reactor 2 as described herein where the reaction vessel 2c is without means for agitation or transportation of particles of formula (I) and without structuring elements in the fixed bed formed by particles of formula (I).

**Inlet 2a, Outlet 2b:** In- and Outlet are elements, adapted to fill and remove gases from said inner volume. Further, they are adapted to retain particulate material within the reactor vessel. Commercial valves may be used. It is apparent that such in- and outlet are in fluid communication with further units of the system described below. Depending on the operation mode, in- and outlet may exchange its function, i.e. inlet in charging mode and outlet in discharging mode. In- and outlet are positioned according to the reactor design, such as at the top and at the bottom of the reactor 2 (two axial positions), or on the reactor top only (one axial position) or evenly distributed in side positions of the reactor (radial positions).

In embodiments, the reactor comprises one inlet 2a which splits within the reactor into a distribution system, i.e. a multitude of release pipes. Such embodiment allows even distribution of starting materials to the fixed bed described herein and is preferably implemented in small reactors, as defined herein.

In embodiments, the reactor comprises one outlet 2b which splits within the reactor into a multitude of collection pipes. Such embodiment allows improved collection of reaction products converted at the fixed bed described herein and is preferably implemented in small reactors, as defined herein.

In a further embodiment, the reactor comprises multiple inlets and multiple outlets which again might exchange their function depending on the operation mode of the reactor. Further advantageously, the reactor can comprise a number of more than ten inlets and more than ten outlets. This embodiment allows specific control of reaction conditions within the reactor. Such embodiment being preferably implemented in large reactors, as described herein.

The design of inlet and outlet is within the ordinary skill, considering size of reaction vessel, type of fixed bed and mass flow of reactants.

As discussed herein, the outlet 2b may be complemented by a splitter, ie. a device separating reactor output IV into a first stream IVa for recycling (direct recycle stream IVa) and an initial product stream IVb for further treatment in Hydrogen water separator 3 or 11 respectively.

**Insulation 2f:** The reactor 2 comprises a thermal insulation; such insulations are known per se. Thermal insulation of the reactor vessel reduces the amount of heating energy that has to be provided to the reactor. Requirements for insulations are low thermal conductivity and long-term stability at the respective temperatures. Suitable insulations include rock wool and/or vacuum chambers.

**Optional compensation element 2d:** Optionally, one or more compensation elements may be included in reactor 2. The term describes an element to compensate a change in volume (compaction/expansion = breathing) of the fixed bed during the process. Accordingly, said compensation element is capable to adjust said inner volume. During the reaction described below, particles of formula (I) are oxidized or reduced. As a consequence, particle size changes. To avoid formation of cavities in the reactors inner volume, the one or more compensation element is implemented. Accordingly, the one or more compensation element is adapted to compensate volume dilatation / compression during operation of the reactor. Such a compensation element is known per se; it may be configured in the form of a membrane or in the form of a piston or in the form of a sponge or in the form of fibrous material or in the form of a bellow. Suitable fibrous materials are known and include inorganic materials obtained by spinning or drawing molten mineral or rock materials. Examples of such fibrous materials include mineral wool such as commercially available stone wool, slag wool, and glass wool. Other such suitable materials can be metallic, such as stainless steel with an enhanced corrosion resistance and low potential hydrogen damage. In particular, if more than one compensation element is implemented in the reactor, the two or more compensation elements can be arranged in series, e.g. a fibrous material such as stone wool can be arranged in series with a bellow to compensate the volume changes during the operation of the reactor.

In embodiments, the reactor is free of compensation elements. When implementing the recycle loop (IV) as described herein, it was found no longer necessary to include a compensation element. Thus, in a preferred embodiment, the invention relates to a reactor 2 as described herein, i.e. with recycle loop IVa, but without compensation element(s) 2d.

**Optional further elements:** The reactor may, as discussed above, comprise one or more additional elements.

The temperature of the charging reaction and the temperature of the discharging reaction are subject to multiple criteria. Lower temperatures are of advantage regarding heat loss of the system and ageing of the oxygen carrier material, while reaction kinetics are enhanced at higher temperatures. Regarding thermodynamic equilibrium between the reacting atmosphere and the solid oxygen carrier material, higher temperatures are favoured during the charging process and lower temperatures are favoured during the discharging process. Suitable ranges include:
- Charging: 300°C - 650°C, preferably 400°C -600°C, most preferably 450°C - 570°C.
- Discharging: 150°C - 650°C, preferably 400°C -600°C, most preferably 450°C - 570°C.

In an embodiment of the invention, the reactor itself does not comprise a heating element. To attain and maintain the specified temperatures of the charging and discharging process, advantageously, external heaters may be used that heat the fluid before entering the reactor. Therefore, the at least one inlet and the at least one outlet are advantageously configured to receive and transport heated gas, in particular a gas heated up to or above the reaction temperature.

In an alternative embodiment of the invention, the reactor comprises an internal or an external heater. Internal heaters may be used; they directly provide thermal energy to the fixed bed. Alternatively, and preferably, external heaters may be used; they provide energy to the reactor vessel ("heating mantle").

In an alternative embodiment of the invention, the reactor 2 comprises a heating mantle at least partially surrounding reaction vessel 2c and the at least one inlet 2a is configured to receive and transport gas, heated up to or above the reaction temperature.

In one embodiment, sensing elements, such as temperature and / or pressure sensors and / or oxygen sensors, are included.

In one further embodiment, the reaction vessel 2c is in fluid communication with at least one gas supply (referring to the unit in fluid communication with the reaction vessel). Implementing such gas supply is a further safety measure. It can be an inert gas supply (typically an air separation unit delivering nitrogen), in connection to the reactor's inner volume, and controlled by at least one pressure measuring element. This gas supply can be used in emergency situations to balance pressure reduction inside the reactor as a result of cooling (e.g. if the reactor is switched from hydrogen storage to hydrogen release, where the latter is often at lower temperature), or if the reactor is shut down (e.g. for maintenance or control). Pressure reductions inside the reaction vessel can also be the result of hydrogen absorption through reaction with the iron oxide if latter is substoichiometric, and the amount of steam is not equal to the amount of absorbed hydrogen. In most cases, at least two (at least one redundant) inert gas supplies will be used. During normal operation, the injection of inert gas is not preferred as it dilutes the hydrogen.

In one embodiment, the reactor is equipped with at least one heat exchanger. The amount of required heating energy can be reduced by heat recovery. For example, a stream entering the reactor can be heated by a stream leaving the reactor in a heat exchanger.

**Particles of formula (I):** Formula (I) encompasses iron in oxidation state +/-0, +2 and +3 and consequently idealized formulae:

| | | |
|---|---|---|
| Fe | (Ia), x=0, | Fe^{+/-0} |
| FeO = FeO₁ | (Ib); x=1, | Fe⁺² |
| Fe₃O₄ = FeO_{4/3} | (Ic); x=4/3, | Fe⁺² and Fe⁺³ |
| Fe₂O₃ = FeO_{3/2} | (Id), x=1.5, | Fe⁺³. |

The above formula (I) also includes non-stoichiometric compounds, such as wüstite (Fe_{1-z}O, z<1) and mixtures of these compounds. Phase diagrams showing stability of iron oxides at various temperatures are known.

The above formula (I) further includes hydrates of the compounds of formula (I). For example, Fe(OH)₂ = FeO x H₂O shall be covered by formula (Ib); similarly, Fe₂O₃ x nH₂O is covered by FeO_{3/2}.

The above formula (I) indicates an average oxidation state of the particles present. For example, a reduced compound of formula (I), represented by FeO, indicates the presence of particles containing FeO, but also some amount of Fe and Fe3O4, Fe2O3 may be present, either in the same particle or in other particles. The overall oxidation state of Fe of the bulk material is in this example +II.

The above particles of formula (I) may be doped or mixed with other elements, which enhance the oxygen carrier's stability towards sintering and/or promote its reduction reaction and/or promote its oxidation reaction under process conditions. Such dopants are preferably present in an amount of 0-30%, more preferably 0-10% most preferably 0-3%. Examples of such dopants include Ce, W, Mo, Cr, Al, Si, Ca, Mg, Ti, V, Mn, Ni, Co, Cu, Pd, Pt, Rh, Zr, Y, Gd, Zn in metallic or any of their oxidized forms. Thus, the invention also relates to a reactor as described herein, where the particles of formula (I) contain such dopants. Without being bound to theory, it is believed that implementing the recycle line (IV) allows for much more flexibility in choosing suitable starting materials.

The above particles of formula (I) are available from many natural and synthetic sources. Such particles are commercial items, and available for example as pigments from various suppliers.

The above particles of formula (I) may be formed in situ, as they contain impurities or are selected from precursor materials, such as iron hydroxides and / or carbonates.

Such hydroxides or carbonates are converted to FeOₓ (I), where 0 ≤ x ≤ 1.5 during operation or in an activation step prior to continuous operation. Thus, the invention also relates to a reactor as described herein, where the particles of formula (I) are obtained from a precursor material, the precursor material being selected from the group consisting of iron carbonate, iron hydroxide, iron oxyhydroxide and mixtures thereof. Without being bound to theory, it is believed that implementing the recycle line (IV) allows for much more flexibility in choosing suitable starting materials.

The above particles of formula (I) may be selected from natural iron ore. Such iron ores containing up to 10 wt% impurities, particularly Ca, Al, Mg. Such iron ores further may contain carbon, particularly in the form of iron carbonate. Thus, the invention also relates to a reactor as described herein, where the particles of formula (I) are obtained from a precursor material, the precursor material being selected from such iron ores. Without being bound to theory, it is believed that implementing the recycle line (IV) allows for much more flexibility in choosing suitable starting materials.

Preferably, the reactor is charged either with iron oxide (potentially containing carbonates and/or hydroxides as discussed above), since it is an easy-to-handle material (not inflammable compared to iron particles).

**Cavity-free filling:** Particles of formula (I) essentially fill the above-described inner volume of the reaction vessel 2c. Accordingly, the fixed bed makes up at least 90%, preferably at least 95%, much preferably at least 98% of said inner volume. The remaining volume may be occupied by other elements of the reactor, for example structuring, stabilizing, heating elements, or in- and outlets, or sensors.

As discussed above, the fixed bed, comprising or consisting of particles of formula (I), is free of large cavities. The term cavity denotes a space within the reactor volume that does not contain particles of formula (I). Such cavities are defined (i) by a maximum volume and (ii) a maximum length. The volume of a cavity is the volume of the biggest ellipsoid that fits into the cavity. The volume of an ellipsoid is *V_{cavity}* = *V_{ellipsoid}* = 4/3 · π *a · b · c,* where a, b, and c are the three principal radii of the ellipsoid.

In one embodiment, no cavities are present (i) where *V_{ellipsoid}* is larger than Vₘₐₓ = 20000 mm³, while (ii) all three principal radii describing this volume are at least cₘᵢₙ = 5 mm. Given the above formula the maximum extension of a cavity is below a = b = 5 mm and cₘₐₓ = 191 mm.

In one further embodiment, no cavities are present (i) where *V_{ellipsoid}* is larger than Vₘₐₓ = 10000 mm³, while (ii) all three principal radii describing this volume are at least cₘᵢₙ = 3 mm. Given the above formula the maximum extension of a cavity is below a=b=3 mm and cₘₐₓ = 265 mm.

Due to this cavity-free filling of the reactor, accumulation of hydrogen is prevented. The reactor is thereby inherently explosion - proof. In particular, due to the large size of the reactor, the weight of the fixed bed material in particular in the lower region of the reactor is high enough to prevent formation of cavities within the reactor. This is a significant advantage over the prior art, as no specific safety measures have to be taken. The reactor is thereby fit for commercial use on a large scale.

Generally speaking, the inventive reactors and methods are robust towards starting material used. No pre-treatment needed (fewer manufacturing steps needed), no need for added chemical dopants (fewer manufacturing steps, less resource usage, lower cost) and the material has a longer lifetime. Further, milder operating conditions (i.e. comparatively low operating temperatures and / or pressure, which results in less energy loss, works in cheaper reaction vessels) are suitable. Specific further considerations and embodiments of the reactor 2 are outlined below:
[**Embodiment 1**] "Small scale Reactor": This embodiment is illustrated in fig. 5A and shall be explained in further detail below.

In this embodiment, the reactor (2) comprises a reaction vessel (2c) of 50m3 or less in the form of a cylinder, where gas inlets (2a) and gas outlets (2b) are located in axial position on one face of the reaction vessel. The reactor comprises a cylindrical reactor vessel of 50 m3 volume, with a diameter of 3.2 m and a height of 6.2 m. The reactor has 1-4 inlets (2a) on the top located close to the circumference, connected to an apparatus distributing the gas in the outmost layer of the reactor. The reactor has 1 outlet (2b) centered on the top, connected to a guiding element inside the reactor vessel which ensures homogeneous gas distribution within 2c. The reactor wall has an additional heating element to keep the reactor at the desired temperature. The reactor vessel is filled with a natural iron oxide with particles of sizes between 10 to 100 µm. The outlet 2b contains a filter element to avoid FeOx particles to leave the reactor.

A pipe connects the outlet to the heat exchanger used to heat up the gas mixture going to the reactor. The gas flow IV leaving the reactor is split and partially fed to the consuming unit (stream IVb) and partially recycled and fed by means of a blower to the inlet (s) 2a entering the reactor through a heat exchanger (stream IVa). The piping going from the heat exchanger to the inlet/inlets of the reactor tank is heated using a heating element.

All piping, heat exchanger and reactor are well insulated and selected from materials compatible with maximum reaction temperature of 650°C and reaction pressure 5 bar, or maximum reaction temperatures of 600°C and reaction pressure of 10 bar.

[**Embodiment 2**] "Large scale Reactor": This embodiment is illustrated in fig. 5B and shall be explained in further detail below.

In this embodiment, the reactor (2) comprises a reaction vessel (2c) of more than 50m3 in the form of a cylinder, where a multitude of gas inlets (2a) and a multitude of gas outlets (2b) are located in radial position of the reaction vessel. A reactor comprising a cylindrical reactor vessel of 500 m3 volume, with a diameter of 10 m and a height of 6.2 m. The reactor vessel is filled with iron oxide, suitably filled with a natural iron oxide with particles of sizes between 10 to 100 µm. The reactor contains 3 inlets, connected to an apparatus distributing the gas in layers of the reactor. The reactor has 2 outlets, connected to an apparatus inside the reactor vessel distributing the gas in layers of the reactor. These layers function like plates to ensure homogeneous gas distribution. The reactor wall has an additional heating element to keep the reactor at the desired at the wall temperature. The apparatus connected to the outlet contains a filter element to avoid FeOx particles leaving the reactor and thereby potential clogging the piping described below.

The piping going from the heat exchanger to the inlets of the reactor tank is heated using a heating element. A pipe connects the outlets to the heat exchanger used to heat up the gas mixture going to the reactor. The gas flow is split and partially feed to the consuming unit and partially recycled and feed by means of a fan to the inlet pipe entering the reactor through a heat exchanger.

All piping, heat exchanger and reactor are well insulated and selected from materials compatible with maximum reaction temperature of 650°C and reaction pressure of 5 bar or with maximum reaction temperature of 600°C and reaction pressure of 10 bar.

In a **third aspect,** the invention relates to an energy storage system 13 adapted to convert electrical energy into chemical energy and storing the same ("charging") and its reverse process ("discharging"). Key units of such system 13 are a reactor 2 as described herein, a hydrogen-water separator and a hydrogen consuming unit and a hydrogen supplying unit. The inventive systems are useful for compensating long-term fluctuations observed in production of renewable energy. This aspect and various embodiments of this system shall be explained in further detail below:
In one embodiment, **c.f.** **fig.1****,** the energy storage system 13 comprises a reactor 2 as described herein, said reactor being in fluid communication with a unit 3 separating water from hydrogen, said unit (3) being in fluid communication with a hydrogen consuming unit, such as turbine 9 or a reversible fuel cell 1 or ammonia production plant, via line V; and optionally in fluid communication with reactor inlet 2a via line Va, said line Va establishing an additional recycle stream. A hydrogen supply unit, preferably a reversible fuel cell as discussed below, is also included in this embodiment.

In a further embodiment, **c.f.** **fig.2****,** the energy storage system 13 further comprises an electrolyzer 8. Said electrolyzer 8 being in fluid communication with reactor 2.

In one further embodiment, **c.f.** **fig.3****,** the invention provides for an energy storage system 13 comprising a reactor 2 as described herein, said reactor being in fluid communication with a first separating unit 10 operated during charging mode and in fluid communication with a second separating unit 11 operated during discharging mode. It is apparent that according to this embodiment, said separating unit 3 is replaced by a first separating unit 10 (in operation during charging) and a second separating unit 11 for (in operation during discharging).

In one further embodiment, an additional indirect recycling line Va is implemented, providing for fluid communication between 3b (or 11b) and 2a. This may be implemented by providing a splitter that separates the H2 stream from exit 3b (or 11b) into a H2 product stream V and an indirect recycle stream Va. This embodiment allows for an additional recycle of hydrogen into the reactor and thus improved process control. This line Va is shown as dotted line in figs. 1-3.

As a specific embodiment, not shown in the figures, recycle line Va replaces recycle line IVa. In this specific embodiment, the reactor 2 is free of recycle loop IVa, as recycle loop Va is implemented. It is believed this embodiment is less preferred, as H2/H2O are separated first and the thus separated hydrogen is combined with water again. However, if minor amounts of hydrogen are recycled this specific embodiment may be preferential, as no gas condensation occurs and no insulation is required.

The above units, except reactor 2, are known per se and may be scaled and / or adapted by the skilled person to comply with the uses described herein. Further details on these units is provided below:
A **reactor 2** is a unit described above, first aspect of the invention.

A **hydrogen water separator 3, 10, 11** is a unit able to separate the two components. Such units are known and include condensers, desiccators, and membrane separators. The conversion of hydrogen to water during the charging process is thermodynamically limited, i.e. the stream leaving the reactor contains both, hydrogen and water. Recycling of unreacted hydrogen to the reactor (4 in figs. 1, 2 and 3) requires removal of water in a separator (3, 10, 11 in figs. 1, 2 and 3).

Established methods for the separation of water and hydrogen include condensation of water, adsorption of water in a desiccator, and membrane separation. Depending on the detailed locally available media and characteristics (water, heating sources, size of installed photovoltaics, season, geographic location), different techniques may be implemented.

In lieu of one single separator 3, a first and a second separator 10, 11 may be present. The first separator 10 removes H₂O from the stream which leaves the reactor during charging. The separation could be based on a molecular sieve taking up water, or a membrane with a higher permeability for one of the gases, or on condensation of steam. The second separator 11 splits the stream, which leaves the reactor during discharging, into a stream of higher hydrogen fraction and a stream of lower hydrogen fraction. The separation could be based on a molecular sieve taking up water (operated in swing mode), or a membrane with a higher permeability for one of the gases, or on condensation of steam.

**Hydrogen supply units** include reversible fuel cell 1 and electrolyzer 8.

A **reversible fuel cell 1** is a unit combining the function of a fuel cell and of an electrolyzer. Such reversible fuel cells are commercial items or may be manufactured according to known methods.

An **Electrolyzer 8** is a unit cleaving water into oxygen and hydrogen, thereby consuming electrical energy. Electrolyzers are commercial items.

**Hydrogen consuming units** include fuel cells, hydrogen turbines and ammonia production plants.

A **Fuel cell 9** is an electrochemical generator wherein the reactants are supplied from outside. According to this invention, hydrogen is combined with oxygen or air to produce electrical energy. Fuel cells are commercial items.

A **turbine 9** here refers advantageously to a hydrogen turbine. A hydrogen turbine is a gas turbine, adapted to burn hydrogen gas. The turbine 9 might be complemented with further units for energy production e.g. in a setting with a power plant.

**Optional Units:** In addition to the units describe above, the inventive system 13 may be combined with further units, particularly to increase efficiency and / or safety. Fluid communication between the units is enabled by piping systems, including pipes, valves, and sensors, as conventional in the field. As mentioned above, reactants hydrogen, water and air move through the various units of the inventive system, the compound of formula (I) is not transported and remains within reactor 2. This is a substantial advantage over systems known from DE 10 2017 201 861.

**Embedding of the system:** In one embodiment, the present system 13 is connected to a heat distribution network (district heating). The network can transport heat - that is not integrated within the system 13 - for example in the form of steam to nearby locations such as residential buildings, where the heat can be used for example for space heating or water heating.

In one embodiment, the present system 13 is electrically connected to an electrical station, via power in- and output VIa, VIb. The electrical station may be connected to the electrical grid and / or (directly) to other electric power plants (e.g. hydro power plant) and/or local (renewable) electric energy sources (e.g. wind farm, photovoltaic power station).

**Pumps, compressors, ventilators:** Further, a pump, compressor or a ventilator may enable flow of hydrogen for hydrogen recycling. Hydrogen compressors, ventilators or pumps are commercially available in the form of membrane pumps, rotary pumps, piston pumps and others. Since only low pressure differences are used in the here described systems, rotary and membrane pumps are suitable. Preferably, the pump is encapsulated with a gas impermeable shell, rendering hydrogen release improbable. The separated water which is produced during hydrogen recycling can be stored to be used in the discharging step. Alternatively, the separated water can also be used in the electrolyzer during the charging step. The reuse of water inside the system may require a purification step, as known in the field. Further, a pump or a compressor may enable the flow for water feeding and water recycling.

**Measurement/Control System:** The here described energy storage system typically requires a control unit, either containing a computer or a microcontroller. In some cases, also a remote controlled option using a data transmission may be used. Whilst controllers are known to the person skilled in the art, the here described system need at least one pressure controller, at least one temperature measurement. Usually, several temperature measurements and/or several gas sensors (oxygen sensors) will be used to monitor the system.

**Safety:** The inventive system benefits from improved safety, this shall be explained in further detail:
As a first safety measure, the reactor and associated units / elements, such as water separator or valves and sensors are best arranged in a way to minimize tube length, number of connectors and the area of the outer wall, separating the hydrogen containing parts from the outside (air). While later is common standard in good engineering praxis, the inside of the reactor is characterized by the fact that it is essentially full, as described above.

A second safety measure is the very low pressure under which the inventive system operates. The reactor typically operates at 5 bar or less which is very low compared to 100 bar or current systems. This measure ensures a reduced outflow (pressure is slightly higher than atmospheric pressure of the air outside) of hydrogen in case of a leak, or inflow of air (if the reactor is at a lower pressure than the atmosphere outside). In both cases, dangerous mixtures of hydrogen and air could result in flames or explosions. This second safety measure is further beneficial to the reactor weight and manufacturing costs, as thinner walls can be used, with lower overall metal requirement. Further, the reactor typically operates at temperatures between 150 - 600 °C. In this temperature range, the compound of formula (I) shows little, if any, volume dilatation. Thus, volume compensation elements are not required.

A third (optional) safety measure is the use of at least one inert gas supply being in fluid communication with the reactors inner volume, as described above.

A fourth safety measure is absence of moving elements (with the exception of pumps / compressors.

A fifth (optional) safety measure would be to install sensors for detecting oxygen. Such monitoring of the oxygen level allows to monitor the method described herein and performing them above the upper explosion limit (UEL) of hydrogen.

In a **forth aspect,** the invention relates to the use of reactors and systems as described herein as well as to methods to store and release hydrogen by operating a reactor 2 as described herein or to store and release electrical energy by operating a system 13 as described herein. This aspect of the invention shall be explained in further detail below:
Generally speaking, hydrogen acts as energy vector. In the inventive systems, the amount of molecular hydrogen is low compared to mechanical hydrogen storage at very low temperatures and / or high pressures and the pressure is low compared to pressurized hydrogen storage. The present invention addresses the need to provide energy storage systems that are adapted to the requirements of large-scale production.

The storage medium FeOx, under previously reported reaction conditions loses surface area (and thus storage capacity) during each discharge cycle. Due to such aging processes, the storage medium can therefore not be fully discharged and it loses storage capacity within each cycle, making the process unsuitable for long duration storage due to high cost of the alternative materials. However, the process conditions disclosed herein avoid this loss of surface area. The storage capacity remains constant over at least 20 cycles and chemical activity increases, remains constant or only slightly decreases. The required adjustment of the process can be achieved by implementing a recycle stream IV. Such stream IV may be realized using technologies known in the art, such as a compressor or blower. Keeping a high capacity over several cycles with low cost material is considered a key feature for reliable long duration storage using the steam iron process.

In one embodiment, the invention relates to a method for storing hydrogen, comprising the step of reducing a compound of formula (I) in a reactor as defined herein by feeding said reactor with a H₂-containing gas, optionally after activation of the compound of formula (I), thereby obtaining a reduced compound of formula (I) and water. As discussed herein, the hydrogen is preferably obtained from electrolysis of water and thereby free of carbon containing compounds. However, the hydrogen may be also obtained from other sources, such as conversion of natural gas or water-gas shift reaction. In such case, the hydrogen may contain impurities of carbon containing compounds, such as CO, CO2, CH4. It is preferred to use hydrogen with low carbon content, such as below 1000 ppm Carbon, preferably below 500 ppm Carbon, most preferably below 100 ppm Carbon (determined e.g. via GC-MS).

In one embodiment, the invention relates to a process for generating hydrogen, comprising the steps of (a) oxidizing a compound of formula (I) in a reactor as defined herein by feeding said reactor with steam (II) (and hydrogen from step c), thereby obtaining an oxidized compound of formula (I) and a hydrogen / steam mixture with a higher hydrogen content; (b) splitting the thus obtained hydrogen / steam mixture in to a recycle stream IVa and an initial product stream IVb; (c) feeding recycle stream IVa into the reactor; and (d) further processing the initial product stream IVb in a water / hydrogen separator. Typically, the mass flow recycle stream IVa : initial product stream IVb is > 1:1, preferably > 2:1.

In one specific embodiment, the invention relates to a process for generating and using hydrogen, comprising the steps (a-1), (a-2), (b), (c), (d-1) for generating hydrogen and optionally (d-2) for using hydrogen.

In step (a-1), a gaseous feed stream containing (particularly consisting of) 10-60 vol% water and 40-90 vol% hydrogen and optionally up to 10 vol% further gases is provided. This feed stream preferably contains 60-75vol% hydrogen. Further, this feed stream preferably contains less than 1 vol%, preferably no, further gases.

In step (a-2) a compound of formula (I) is oxidized in a reactor as described herein by feeding said reactor with said feed stream of (a-1) at a temperature between 400-600°C, preferably 450-570°C, thereby obtaining an oxidized compound (I) and a H₂O/H₂ gaseous mixture with increased hydrogen content.

In step (b), the thus obtained gas is split into a recycle stream IVa and an initial product stream IVb. Preferably, the ratio recycle IVa : product IVb is > 1 : 1, as described above.

In step (c), the recycle stream (IVa) is combined with water (steam) to obtain the feed stream with a gas composition as defined in step (a-1);

In step (d-1) H₂ is separated from said initial product stream IVb for further use.

In optional step (d-2) the obtained hydrogen is subjected to further process steps. Suitable further process steps include an electrochemical oxidation step, to thereby obtain water and electrical energy. Suitable further process steps include chemical synthesis steps. Suitably, the hydrogen produced is used in ammonia synthesis or hydrogenating reactions. Still further, suitable further process steps include supplying a combustion engine with said hydrogen, particularly for generating electrical energy. Hydrogen turbines are preferred combustion engines.

In one embodiment, the invention relates to a method for storing electrical energy, said method comprising the steps of (x) electrolytically reducing water to obtain hydrogen; (y) reducing a compound of formula (I) in a reactor as defined herein by feeding said reactor with a hydrogen-containing gas obtained in step (x), thereby obtaining a H₂ / H₂O gaseous mixture; (z) separating H₂ from said gaseous mixture and recycle said H₂ into said reactor. According to this invention, electrical energy is consumed by conversion to chemical energy in a hydrogen (H₂) producing electrolyzer. The produced hydrogen is passed through a fixed bed reactor. The fixed bed consists of an iron based oxygen carrier in oxidized form (FeOₓ). At elevated temperatures, the oxygen carrier is reduced by hydrogen, which produces steam (H₂O) and the oxygen carrier in reduced form (FeO_{y}, with y < x):

(x-y) H₂ + FeOₓ -> (x-y) H₂O + FeO_{y}

While the reactor may be filled initially with FeO_{3/2}; the charging / discharging is between 4/3 ≥ x ≥ 0.

The stream leaving the reactor consists of unreacted hydrogen and steam. This stream is fed to a first separator, where steam is (partially) removed from the stream. The resulting stream has a higher hydrogen fraction H₂/(H₂O + H₂) and is fed back to the reactor.

In one embodiment, the invention relates to a method for releasing electrical energy, said method comprising (d) oxidizing a compound of formula (I) in a reactor as defined herein by feeding said reactor with water, in the form of steam / H2 mixture, thereby obtaining an oxidized compound of formula (I) and a H₂O/H₂ gaseous mixture with increased H2 content, (e) separating H₂ from said gaseous mixture and (f) converting the chemical energy in said H₂ through oxidation to thereby obtain water and electrical energy.

According to this invention, water (in the form of steam) in combination with hydrogen is passed through a fixed bed reactor. The fixed bed consists of an iron based oxygen carrier in reduced form (I'). At elevated temperatures, the oxygen carrier is oxidized by steam, which produces hydrogen and the oxygen carrier in oxidized form (I''):

(x-y) H₂O + FeO_{y} -> (x-y) H₂ + FeOₓ; whereby x > y (I') (I")

The stream leaving the reactor consists of unreacted steam and hydrogen with an increased concentration compared to the stream fed to the reactor. This initial product stream (IVb) is fed to a separator to obtain hydrogen which is fed to a turbine and/or a hydrogen consuming fuel cell, where chemical energy is converted to electrical energy.

Inventive Reactors may be used for different purposes.

In one embodiment, the invention relates to the use of a reactor 2 as described herein for converting hydrogen to water and storing the thus obtained energy by reducing a compound of formula (I). This operation mode is also referred-to as "charging mode", given the energy used for generating hydrogen is now stored within the reactor.

In one embodiment, the invention relates to the use of a reactor 2 as described herein for converting water to hydrogen by oxidizing a compound of formula (I) thereby releasing the previously stored energy. In analogy, this operation mode is also referred-to as "charging mode". It is preferred to alternate charging and discharging mode, typically in time intervals of 3-9 months, summer season and winter season, as discussed below.

In one embodiment, the invention relates to the use of a reactor 2 as described herein for purifying hydrogen. Conventionally produced hydrogen often contains impurities of other gases, particularly carbonaceous gases (CO, CO2, CH4, H2S). These impurities are known in the field to deactivate catalysts and a purification step is therefore needed for a stable, long-term operation of the hydrogen consumption units comprising such catalyst, such as a fuel cell. Feeding such gas to the inventive reactor will result in a purified hydrogen stream after generating hydrogen by oxidation of iron. In embodiments, the hydrogen generated has - after removal of water (e.g. via adsorption or cooling) - a purity of 99.9% or more. In embodiments, the hydrogen generated contains less than 10 ppm CO, less than 10 ppm CO2, less than 10 ppm CH4 and less than 10 ppm H2S. In one embodiment, the invention relates to the use of a reactor 2 as described herein for obtaining hydrogen gas at pressures of 2 - 10 bar. Commercially manufacturing methods for obtaining hydrogen typically result in a hydrogen gas stream of ambient pressure. It is energy consuming and requires large compressors to increase hydrogen pressure to 2 - 10 bar. This additional step of hydrogen compression is avoided in the present reactor, given the reactor is operated at these conditions and the water/hydrogen separator may be operated under such conditions as well.

In one embodiment, the invention relates to the use of a system 13 as described herein (i) for storing electrical energy, thereby charging said system; and / or for releasing electrical energy, thereby discharging said system. Preferably, the system is charged during a summer season using surplus energy from renewable energy sources and discharged during a winter season to make up for less production of renewable energy.

Accordingly, in a further embodiment, the invention relates to the use of a diluted steam with partial recycle of generated hydrogen steam mixture during discharge step in the steam-iron-process.

The above methods and uses are described in further detail by reference to the figures 1, 2 and 3. In charging mode (fig. 1A, 2A, 3A) electrical energy is used to produce hydrogen. The thus produced hydrogen is used to reduce a compound of formula (I). In discharging mode (fig. 1B, 2B, 3B) water (steam) is reacted in the presence of hydrogen with the reduced compound of formula (I) to obtain an oxidized compound of formula (I) and additional hydrogen as indicated in the above reaction scheme. The thus produced hydrogen is purified and further used, e.g converted in a turbine and/or in a fuel cell to obtain electrical energy.

**In** **fig. 1A****,** the system is charged: A reversible fuel cell 1 connected with power supply VI is fed with water through line II into inlet 1a. The thus produced hydrogen leaves reversible fuel cell 1 through outlet 1b and enters reactor 2 through inlet 2a. Within the reactor, the hydrogen is reacted with oxidized compound (I) to obtain reduced compound (I) along with a mixture H₂ / H₂O. This mixture leaves reactor 2 through outlet 2b and enters separator 3 through inlet 3a. Water leaves the separator through outlet 3c and may be recycled via line III or discharged. The hydrogen leaves separator 3 through outlet 3b. This H₂ may be recycled via line I or otherwise used.

**In** **fig. 1B****,** the system is discharged: Reactor 2 is fed with water (steam) through line II and inlet 2a. In addition, reactor 2 is fed with recycle stream (steam / hydrogen) through line IV. Typically, lines II and IV are combined prior to entering the reactor. Within the reactor, the water is reacted with reduced compound (I) to obtain oxidized compound (I) along with a mixture H₂ / H₂O. This mixture leaves reactor 2 through outlet 2b, is split into recycle stream IV to inlet 2a and product stream that enters separator 3 through inlet 3a. Water leaves the separator through outlet 3c and may be recycled via line III or discharged. The hydrogen leaves separator 3 through outlet 3b. This hydrogen is fed to the reversible fuel cell 1 at the hydrogen inlet 1e. Within the reversible fuel cell, this hydrogen is reacted with air, entering from inlet 1d, to obtain water and electrical energy, which is provided at power output VIb for further use.

**In** **fig. 2A****,** the system is charged: An electrolyzer 8 connected with power supply VIa is fed with water through line II into inlet 8a. The thus produced hydrogen is fed to reactor inlet 2a. Within the reactor, the hydrogen is reacted with oxidized compound (I) to obtain reduced compound (I) along with a mixture H₂ / H₂O. This mixture leaves reactor 2 through outlet 2b split into product stream and recycle stream as above. Water leaves the separator through outlet 3c as above. The hydrogen leaves separator 3 through outlet 3b. This H₂ may be recycled via line I or otherwise used.

**In** **fig. 2B****,** the system is discharged: Similar to the discussion of fig. 1B, reactor 2 is fed with water (steam) through line II. Within the reactor, the water is reacted with reduced compound (I) to obtain oxidized compound (I) along with a mixture H₂ / H₂O.

The initial reactor output leaves reactor 2 through outlets 2b and 2b' without a splitter. A recycle stream IVa (steam / hydrogen) leaves the reactor through outlet 2b and reaches inlet 2a. An initial product stream IVb leaves the reactor through outlet 2b' and enters separator 3 through inlet 3a.

Water leaves the separator through outlet 3c and may be recycled via line III or discharged. The hydrogen leaves separator 3 through outlet 3b. This hydrogen is fed to hydrogen consuming unit 9 at the hydrogen inlet 9b.

**In** **fig. 3A****,** the system is charged: An electrolyzer 8 connected with power supply VIa is fed with water through line II into inlet 8a. The thus produced hydrogen is fed to reactor inlet 2a. Within the reactor, the hydrogen is reacted with oxidized compound (I) to obtain reduced compound (I) along with a mixture H₂ / H₂O. This mixture leaves reactor 2 through outlet 2b and enters separator 10 through inlet 10a. Water leaves the separator through outlet 10c and may be recycled via line III or discharged. The hydrogen leaves separator through outlet 10b. This hydrogen may be recycled through line I or otherwise used.

**In** **fig. 3B****,** the system is discharged: Similar to the discussion of fig. 1B, reactor 2 is fed with water (steam) through line II and recycle stream (steam / hydrogen) through line IV to inlet 2a. Within the reactor, the water is reacted with reduced compound (I) to obtain oxidized compound (I) along with a mixture H₂ / H₂O. This mixture leaves reactor 2 through outlet 2b, is split into recycle stream IV to inlet 2a and product stream that enters separator 11 through inlet 11a. Water leaves the separator through outlet 11c and may be recycled via line III or discharged. The hydrogen leaves separator 11 through outlet 11b. This hydrogen is fed to hydrogen consuming unit 9 at the hydrogen inlet 9b. Within the hydrogen consuming unit, this hydrogen is consumed to produce electrical energy or chemically converted (hydrogenated) compounds.

To further illustrate the invention, the following, nonlimiting **examples** are provided.

### General:

A schematic view showing the reaction system as used is illustrated in Fig. 4. The reaction vessel comprises a feed pipe, a cylindrical reactor vessel (of 240 mL inner volume) and an outlet pipe. To simulate the recycle loop, H2 and H2O are supplied to the reactor via mass flow controllers to the feed pipe.

The iron compound of formula (I) accommodated in the reaction vessel was prepared by heating the compound to 600°C in air for 12 h prior to loading. This procedure ensured comparable starting conditions for the experiments performed. It is believed this step converts iron carbide, iron hydroxide and iron carbonate into iron oxide FeOx. The used reaction system was not built to withstand hydrogen at temperatures above 550°C. Measurements No. 4 and 5 where therefore conducted in a standard thermogravimetric analyser, as commonly used in the field.

### Reduction step:

Then the sample was put into the reaction vessel, and after air in the system was purged by nitrogen, i.e., inert gas, the reactor vessel and feed pipe were heated to the desired temperature with an electric furnace.

Then hydrogen was introduced to the system at a constant flow rate for a given amount of time for the reducing reaction step. The reducing step was stopped, as soon as no further weight loss was observed. Reaction conditions of the experiments are as follows (table 1).

**[TABLE 1]**

| **No.** | **Material** | **Temperature** | **Composition** |
|---|---|---|---|
| 1 | Sponge Iron | 500°C | 100% H₂ |
| 2 | Sponge Iron | 500°C | 100% H₂ |
| 3 | Sponge Iron | 500°C | 100% H₂ |
| 4 | Sponge Iron | 550°C | 100% H₂ |
| 5 | Sponge Iron | 550°C | 100% H₂ |

### Oxidation step:

After completion of reducing reaction, a steam / hydrogen mixture was introduced into the reaction vessel at a constant flow rate and composition for the oxidation reaction. The composition of the introduced steam / hydrogen mixture was set with the mass flow controllers, such that different recycle ratios of a recycle stream are simulated. The oxidation step was stopped, as soon as no further weight gain was observed. Reaction conditions of the experiments are as follows (table 2.1 & 2.2).

**[TABLE 2.1]**

| **No.** | **Material** | **Temperature** | **Composition** | **Recycle ratio** |
|---|---|---|---|---|
| 1 | Sponge Iron | 500°C | 35% H₂O, 65% H₂ | 0.79 |
| 2 | Sponge Iron | 500°C | 50% H₂O, 50% H₂ | 0.61 |
| 3 | Sponge Iron | 500°C | 90% H₂O, 10% H₂ | 0.12 |
| 4 | Sponge Iron | 550°C | 31% H₂O, 56% H₂ | 0.72 |
| 5 | Sponge Iron | 550°C | 56% H₂O, 30% H₂ | 0.39 |

### Evaluation:

The reduction and oxidation step correspond to one storage cycle and were repeated until the targeted number of cycles were reached.

The recycle ratio ϕ corresponds to the ratio of the flow rates of the recycled stream F_{recycle} and the reactors outlet stream Fₜₒₜₐₗ. The inlet composition was set using mass flow controllers at the different inlet streams. $ϕ = \frac{{F}_{recycle}}{{F}_{total}}$

The evolution of available hydrogen storage capacity was measured gravimetrically after each charging and discharging cycle. A suitable metric to describe the degree of oxidation is the difference of initial mass loaded to the reactor *Mᵢₙᵢₜᵢₐₗ* and the mass of the sample after oxidation in cycle i,*M*_{*i*,*oxidation*}. The difference between these two masses correspond to the mass of oxygen reincorporated from the steam into the iron and it can therefore be used to quantify the degree of capacity loss. The mass difference is normalized with the theoretical maximum weight difference, yielding the storage capacity *C_{Storage,i}* after cycle i. The maximum storage capacity corresponds to the total gravimetric oxygen content of the initial material, which is calculated based on the molar mass of oxygen and magnetite, which correspond to 16 and 231 g mol⁻¹. ${C}_{storage , i} = 1 - \frac{{M}_{initial} - {M}_{i , oxidation}}{{M}_{initial} ⋅ \frac{4 ⋅ 16 g {mol}^{- 1}}{231 g {mol}^{- 1}}}$

The sample preparation and the natural origin of the material causes the samples to be inhomogeneous and it is believed that they have different amounts of initial oxygen content. The storage capacity is therefore referenced to the capacity in the first storage cycle, yielding the relative storage capacity, *R_{storage,i}* ${R}_{storage , i} = \frac{{C}_{storage , i}}{{C}_{storage , 1}}$

The loss of storage capacity corresponds to the no longer available capacity, therefore the relative difference of storage capacity after cycle 1 and the storage capacity after cycle i. ${Loss}_{i} = \frac{{C}_{storage , 1} - {C}_{storage , i}}{{C}_{storage , 1}}$

**[Table 3.1 500°C]**

| No. | Loss of Relative Storage Capacity (DISCHARGE) | | |
|---|---|---|---|
| | 1^{st} Cycle | 2^{nd} Cycle | 3^{rd} Cycle |
| 1 | 0 % | -0.1 % | 0.8 % |
| 2 | 0 % | -0.5 % | -0.3 % |
| 3 | 0 % | 0.9 % | 2.9 % |

**[Table 3.2 550°C]**

| No. | Loss of Relative Storage Capacity (DISCHARGE) | | |
|---|---|---|---|
| | 1^{st} Cycle | 2^{nd} Cycle | 3^{rd} Cycle |
| 4 | 0 % | -0.1 % | -0.1 % |
| 5 | 0 % | 1.5 % | 3.8 % |

### Comparative Example:

To show the effect of the inventive recycle loop, a comparative example was performed without recycle loop. The results are shown in tables 2.2 and 3.3 below

**[TABLE 2.2]**

| No. | Material | Temperature | Composition | Recycle ratio |
|---|---|---|---|---|
| 1 | Sponge Iron | 500°C | 35% H₂O, 65% H₂ | 0.79 |
| Comp. | Sponge Iron | 500°C | 100% H₂O, 0% H₂ | 0.0 |

**[Table 3.3]**

| No. | Loss of Relative Storage Capacity (DISCHARGE) | | |
|---|---|---|---|
| | 1^{st} Cycle | 2^{nd} Cycle | 3^{rd} Cycle |
| 1 | 0 % | -0.1 % | 0.8 % |
| Comp. | 0 % | **2.2 %** | **4.9 %** |

### Conclusion:

The above simulates operation of an energy storage system over a period of 3 years. The data presented indicates the storage capacity in reference to the initial storage capacity, and it refers to the total storage capacity lost after a given cycle.

[Table 3.1] At a process temperature of 500°C, no storage capacity is lost after 3 cycles (No. 1-2) with steam fractions of 30 and 50%. Both measurements correspond to high recycle ratios. In comparison, with a low recycle ratio (steam fraction of 90%, No. 3), some storage capacity is lost.

[Table 3.2] The same tendency is observed at 550°C, where no storage capacity is lost with a high recycle ratio and a steam fraction of 31% (No. 4), but a loss of storage capacity is observed at lower recycle ratios and higher steam fractions (No. 5).

[Table 3.3] Without recycle, according to the comparative example, a substantial loss of storage capacity is observed already after the 1^{st} cycle which continues after the 3^{rd} cycle.

To conclude, the data obtained confirm the above-mentioned problem being solved, namely to provide a more robust steam-iron process.

## Claims

1. A reactor (2) comprising
▪ a reaction vessel (2c) defining an inner volume,
▪ at least one gas inlet (2a) and at least one gas outlet (2b),
▪ an insulation (2f),
▪ a recycle loop (IVa),
**characterized in that**
said inner volume is filled with a fixed bed, wherein said fixed bed contains or consists of particles of formula (I), FeOₓ (I), where 0 ≤ x ≤ 1.5; and
said recycle loop (IVa) allows fluid communication between said at least one outlet (2b) with said at least one inlet (2a).

2. The reactor according to claim 1, **characterized in that**
the recycle loop:
• comprises a splitter to separate a recycle stream (IVa) and an initial product stream (IVb) from the initial reactor output (IV);
• optionally comprises one or more of the following elements: an insulation, one or more heating elements, active means for gas transportation; OR
the recycle loop:
• comprises a direct, splitter-free recycle stream (IVa) which is separate from an initial product stream (IVb);
• optionally comprises one or more of the following elements: an insulation, one or more heating elements, active means for gas transportation.

3. The reactor according to one of the preceding claims, wherein the reaction vessel (2c) complies with one or more of the following:
▪ defines an inner volume of 10 - 1000 m³;
▪ is in the form of a cylinder;
▪ does not contain means for agitation or transportation of particles of formula (I);
▪ does not contain a compensation element.

4. The reactor according to one of the preceding claims, comprising
▪ a multitude of gas inlets and gas outlets (2a, 2b), preferably for reaction vessels (2c) > 50m³ or
▪ a single gas inlet that splits within the reactor into a distribution system and a single gas outlet that splits within the reactor into a multitude of collection pipes, preferably for reaction vessels (2c) < 50m³.

5. The reactor according to one of the preceding claims, which is either
• adapted to reaction pressures p of 0 ≤ p ≤ 5 bar and reaction temperatures of 150 - 650 °C; or
• adapted to reaction pressures p of 5 < p ≤ 10 bar and reaction temperatures of 400 - 650 °C.

6. The reactor according to one of the preceding claims, wherein
▪ the reactor does not comprise a heating element and the reactor is adapted to receive pre-heated feed stream via inlet 2a; OR
▪ the reactor comprises a heated mantle at least partially surrounding the reaction vessel; or
▪ the reactor comprises a heated mantle and the reactor is adapted to receive pre-heated feed stream via inlet 2a.

7. The reactor according to any of the preceding claims, further comprising one or more of the following:
▪ at least one unit in fluid communication with said reaction vessel supplying an inert gas
▪ at least on heat exchanging unit in fluid communication with reactor outlet
▪ at least one sensor, selected from pressure sensors, temperature sensors, and gas-selective sensors.

8. The reactor according to one of the preceding claims wherein particles of formula (I), FeOx (I), where 0 ≤ x ≤ 1.5;
▪ are obtained from a precursor material, the precursor material being selected from the group consisting of iron carbonate, iron hydroxide, iron oxyhydroxide and mixtures thereof, iron carbide; or
▪ are doped with one or more elements selected from the group consisting of Ti, Zr, V, Nb, Cr, Mo, Al, Ga, Mg, Sc, Ni and Cu in an amount of 0.1 - 30 mol%; or
▪ is obtained from a natural ore selected from (i) iron ores containing up to 10 wt% metal impurities, particularly Ca, Al, Mg and/or (ii) iron ores containing carbon, such as iron carbide.

9. A hydrogen storage system (13) comprising
▪ a reactor (2) according to any of claims 1 - 8, said reactor being in fluid communication with
▪ a unit (3) separating water from hydrogen, said unit (3) being
▪ in fluid communication with a hydrogen consuming unit, such as turbine (9) or a reversible fuel cell (1) or ammonia production plant, via line (11); and
▪ optionally in fluid communication with reactor inlet (2a), via line (V) allowing to establish an additional recycle stream.

10. The hydrogen storage (13) system according to claim 9, further comprising an electrolyzer (8), said electrolyzer (8) being in fluid communication with said reactor (2).

11. The hydrogen storage system (13) according to claim 9 or 10, where said separating unit (3) is replaced by two separating units (10, 11), for charging and discharging mode.

12. The hydrogen storage system according to any of claims 9 to 11, where
▪ said line Va is present and
▪ a splitter separates the H₂ stream from exit 3b into a H₂ product stream V and an indirect recycle stream Va.

13. A method for storing hydrogen, comprising the step of reducing a compound of formula (I) in a reactor as defined in any of claims 1 to 8 by feeding said reactor with a hydrogen-containing gas, optionally after activation of compound of formula (I), thereby obtaining a reduced compound of formula (I) and water.

14. A process for generating hydrogen, comprising the steps of:
(a) oxidizing a compound of formula (I) in a reactor as defined in any of claims 1 to 8 by feeding said reactor with water (II), thereby obtaining an oxidized compound of formula (I) and a hydrogen/steam mixture;
(b) removing the thus obtained hydrogen / steam mixture either
(b-1) in one stream, followed by splitting it into a recycle stream (IV) and a product stream, or
(b-2) in at least two streams, a separate feed stream (IVa) and an initial product stream (IVb);
(c) feeding either
(c-1) recycle stream (IV) as a combined feed with water (II) into the reactor, or
(c-2) separate feed stream (IVa) into the reactor in addition to water stream (II); and
(d) further processing the initial product stream (IVb) in a water / hydrogen separator to thereby obtain hydrogen,
wherein said recycle stream is in operation and preferably the mass flow recycle stream (IV, IVa) : product stream (IVb) is > 1:1.

15. A method for storing electrical energy, said method comprising:
(x) electrolytically reducing water to obtain hydrogen;
(y) reducing a compound of formula (I) in a reactor (2) as defined in any of claims 1 to 8 by feeding said reactor with a hydrogen-containing gas, thereby obtaining a H₂O/H₂ gaseous mixture;
(z) separating H₂ from said gaseous mixture in separator (3)/(10) and recycle said H₂ into said reactor (2); and preferably
where said recycle stream (IV) is closed.

16. A process for generating hydrogen according to claim 14, said method comprising:
(a-1 )providing a gaseous feed stream containing 10-60 vol% water and 40-90 vol% hydrogen and optionally up to 10 vol% further gases,
(a-2) oxidizing a compound of formula (I) in a reactor as defined in any of claims 1 to 8 by feeding said reactor with said feed stream at a temperature between 400-600°C, thereby obtaining an oxidized compound (I) and a H₂O/H₂ gaseous mixture with increased hydrogen content;
(b) splitting the thus obtained gas into a recycle stream (IV) and a product stream;
(c) combining the recycle stream (IV) with water to obtain the feed stream with a gas composition as defined in step (a-1);
(d-1) separating H₂ from said product stream; and
(d-2) subjecting the obtained hydrogen to further process steps, preferably
• to an electrochemical oxidation step, or
• to a chemical synthesis step, or
• to a combustion step.

17. Use of a reactor according to any of claims 1 to 8,
• for converting hydrogen to water and storing the thus obtained energy by reducing a compound of formula (I); and / or
• for converting water to hydrogen by oxidizing a compound of formula (I) thereby releasing previously stored energy; and/or
• for purifying hydrogen; and/or
• for obtaining hydrogen gas at pressures of 2-10 bar.

18. Use of an energy storage system according to any of claims 9 to 12
• for storing electrical energy, thereby charging said system; and / or
• for releasing electrical energy or hydrogen, thereby discharging said system.

19. A method for generating hydrogen comprising the steps of
a. providing particles of formula (I), FeOx (I), in reduced form, preferably where 0 ≤ x ≤ 1;
b. contacting said particles with a gaseous mixture comprising H2 and H2O at temperatures between 400 - 600°C, preferably between 450 - 570°C;
to thereby obtain a gaseous mixture with increased hydrogen content.

20. The method according to claim 19, **characterized in that**
said gaseous mixture supplied in step b. contains more than 40 vol% H2, less than 60 vol% H20 and less than 5 vol% other components; and/or
said gaseous mixture of step b. is provided at temperatures of at least 300°C, preferably at least 400°C; and / or
said gaseous mixture of step b. is provided at pressures between 0 - 10 bar, preferably 0 - 5 bar; and / or
said compound of formula (I) is provided in the form of a fixed bed and said gaseous mixture of step b. is continuously supplied to said fixed bed and said hydrogen-enriched gaseous mixture is continuously removed from said fixed bed.

21. The method according to claim 19 or 20, wherein steps a. and b. are performed in a reactor according to any of claims 1 - 8.

22. Use of a gaseous mixture comprising H2 and H2O for oxidizing particles of formula (I), FeOx (I), present in reduced form, preferably where 0 ≤ x ≤ 1.0.
